# EUROPEAN PATENT APPLICATION

(11) **EP 0 874 378 A2**
(43) Date of publication of application: **28.10.1998**
(21) Application number: 98107247.3
(22) Date of filing: 21.04.1998
(51) Int. Cl.: H01F 38/14

(54) **Charging connector for electric vehicle**

(30) Priority: 25.04.1997 JP 109416/97
(71) Applicant: SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Kuki, Heiji, c/o Sumitomo Wiring Systems Ltd., Yokkaichi-shi, Mie (JP); Konda, Kazumoto, c/o Sumitomo Wiring Syst.Ltd., Yokkaichi-shi, Mie (JP); Shimada, Toshiro, c/o Sumitomo Elec. Ind. Ltd., Osaka-shi, Osaka (JP)
(74) Representative: R.A. KUHNEN & P.A. WACKER

(57) **Abstract**

A charging connector for an electric vehicle includes a connector housing and a primary coil. The connector housing is connectable to a power receiving portion formed in the electric vehicle. The primary coil is provided in the connector housing and is electromagnetically coupled to a secondary coil provided in the power receiving portion of the electric vehicle. When the connector housing is connected to the power receiving portion, the two coils are electromagnetically coupled together to transmit electric power from the primary coil to the secondary coil by electromagnetic induction to charge a storage battery of the electric vehicle. An openable shutter is provided at a connection opening in the connector housing through which opening the connector housing is connected to the power receiving portion.

## Description

### BACKGROUND OF THE INVENTION

### 1. Field of the Invention

This invention relates to a charging connector for charging a storage battery of an electric vehicle by an electromagnetic induction system.

### 2. Description of the Related Art

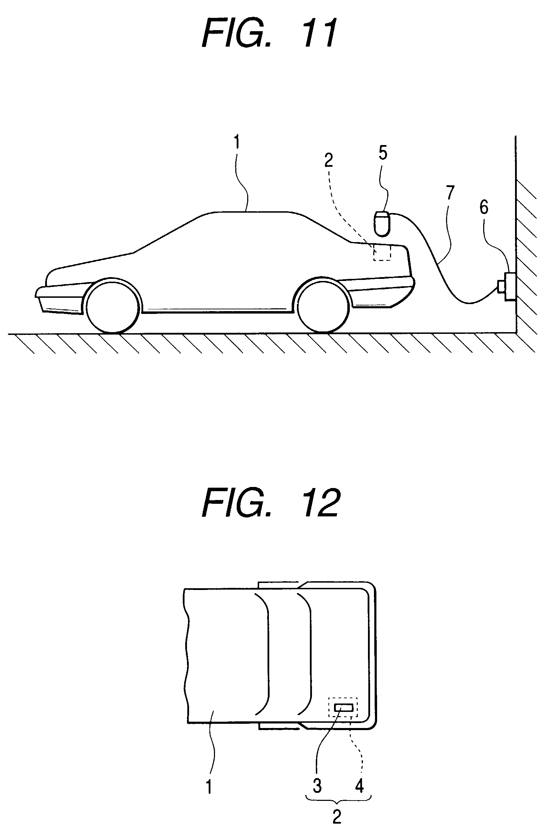

Recently, there has been proposed a method of charging a storage battery of an electric vehicle, using an electromagnetic induction system. One example of such a charging method is shown in Figs. 11 to 13.

As shown in Fig. 11, an electric power receiving portion 2, connected to a power battery (not shown), is provided at a body of an electric vehicle 1. Referring also to Fig. 12, this power receiving portion 2 includes a secondary coil 4 provided in the vicinity of a recess 3 formed in the electric vehicle 1, and a charging connector 5 is inserted into this recess 3. The charging connector 5 is connected via a cable 7 to a charging power source 6 provided in a garage or the like.

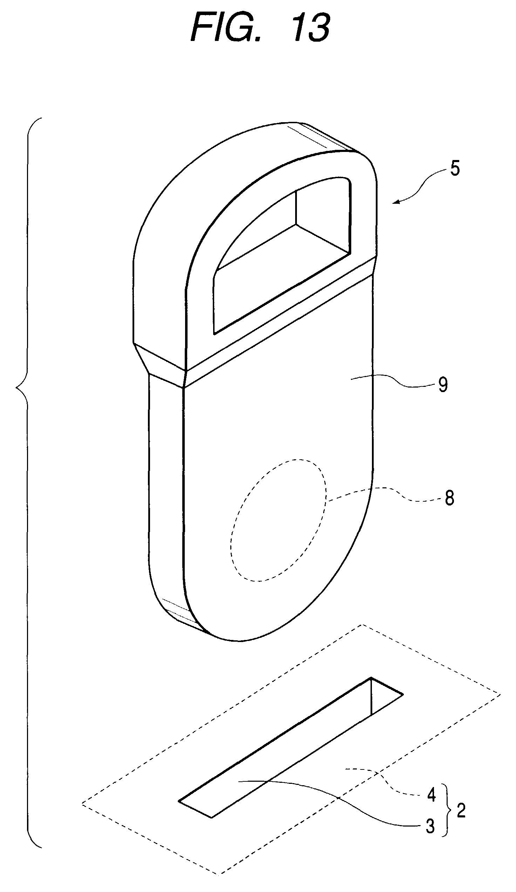

As shown in Fig. 13, the charging connector 5 has a primary coil 8 contained in a connector housing 9 preferably made of a synthetic resin, and when the charging connector 5 is inserted into the recess 3, the primary coil 8 is electromagnetically coupled to the secondary coil 4, so that electric power is supplied from the charging power source 6, shown in Fig. 11, to the power battery via the charging connector 5 and the power receiving portion 2.

In the electric vehicle, a considerable amount of electric power is supplied to the power battery so as to shorten the charging time, and therefore the density of the electric power, transmitted from the primary coil 8 to the secondary coil 4, is high, and the amount of heat, generated from the two coils 8 and 4 and cores, tends to be large.

The design of the charging connector 5 is as compact as possible so that it may be handled easily, therefore its ability to radiate heat is rather poor, which promotes high temperature in the vicinity of the coil and the core.

The connector housing 9 has an opening (not shown) enabling the coil and core to be connected to the mating coil and core. The coil 8 and the core in the connector housing 9 are liable to be exposed to the exterior through this opening, therefore there is a possibility of damage to the coil 8 and the core, as well as the deposition of foreign matters thereon, such that their intended performance may be affected.

### SUMMARY OF THE INVENTION

This invention includes a charging connector for an electric vehicle that prevents an operator from accidentally touching a heated portion of the charging connector. The charging connector prevents damage to a coil and a core within the connector through a connection opening.

The charging connector also prevents the deposit of foreign matters thereon through the connector opening. The charging connector for an electric vehicle includes a connector housing connectable to a Power receiving portion formed in an electric vehicle. A primary coil is provided in the connector housing and may be coupled electromagnetically to a secondary coil provided in the power receiving portion of the electric vehicle. When the connector housing is connected to the power receiving portion, the two coils are coupled together electromagnetically facilitating electric power transmission from the primary coil to the secondary coil by electromagnetic induction so as to charge a storage battery of the electric vehicle. An openable shutter is provided at a connection opening in the connector housing through which the power receiving portion is received. The shutter is provided with an interlocking mechanism which opens the shutter in accordance with the connection of the connector housing to the power receiving portion of the electric vehicle.

These and other features and advantages of this invention are described in or apparent from the following detailed description of the preferred embodiments.

### BRIEF DESCRIPTION OF THE DRAWINGS

Similar reference characters denote corresponding features consistently throughout the attached drawings. The preferred embodiments of this invention will be described in detail, with reference to the following figures, wherein:
Fig. 1 is a vertical cross-sectional detail view of the charging connector of a first embodiment of the invention;
Fig. 2 is a front elevational view of a power receiving portion of the first embodiment of the invention;
Fig. 3 is a partially-broken out, front elevational view of the charging connector of the first embodiment of the invention;
Fig. 4 is a side elevational view of the charging connector of the first embodiment of the invention;
Fig. 5 is a top right front perspective view of the shutter of the first embodiment of the invention;
Fig. 6 is a vertical cross-sectional detail view of the charging connector of the first embodiment of the invention in a connected condition;
Fig. 7 is a vertical cross-sectional detail view of the charging connector of a second embodiment of the invention;
Fig. 8 is a top right front perspective view of the shutter of the second embodiment of the invention;
Fig. 9 is a partially-broken out front elevational view of a charging connector of a third embodiment of the invention;
Fig. 10 is a horizontal cross-sectional detail view of the charging connector of the third embodiment of the invention;
Fig. 11 is a vertical schematic view of a charging system for an electric vehicle of the invention;
Fig. 12 is a partial plan view of the charging system of Fig. 11; and
Fig. 13 is an enlarged top, right, front perspective view of the charging connector of Fig. 11.

### DETAILED DESCRIPTION OF THE PREFERRED EMBODIMENTS

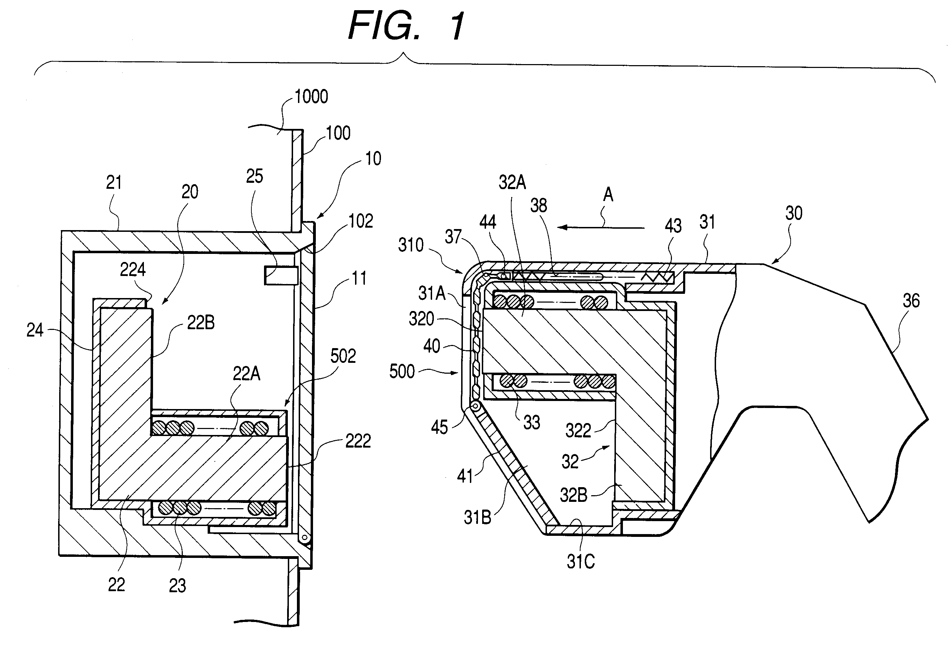

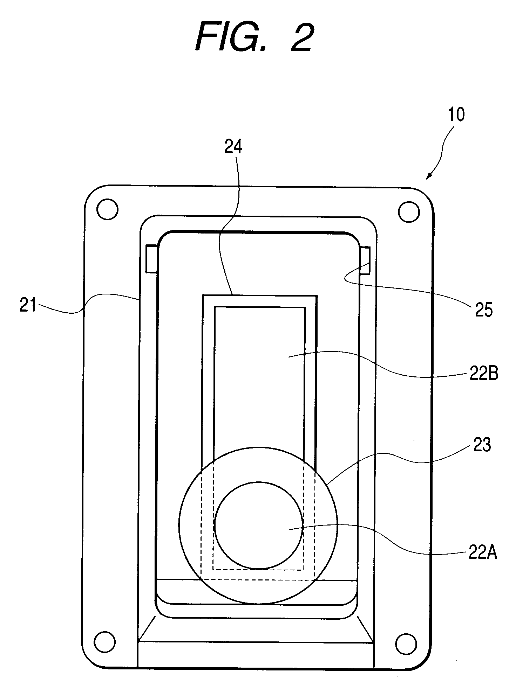

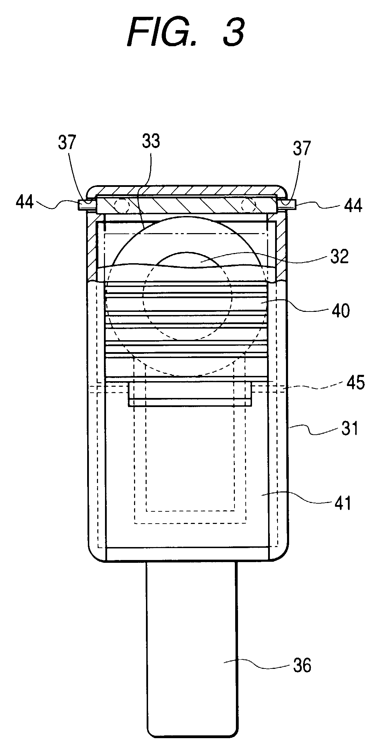

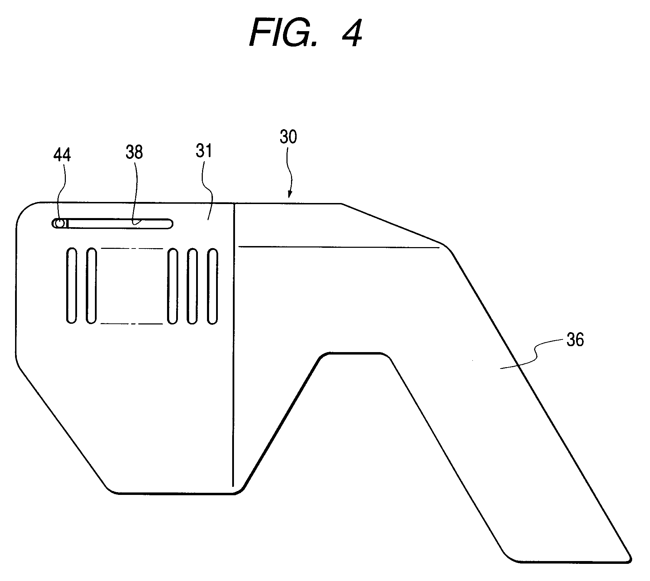

A first embodiment of the invention will be described with reference to Figs. 1 to 6.

An outwardly-open power receiving portion 10 for receiving a charging connector 30, described in greater detail below, is provided in an outer surface 100 of a vehicle body 1000 of an electric vehicle. An opening 102 is securable by a lid 11. A secondary unit 20, described below, is mounted in the power receiving portion 10.

The secondary unit 20 includes a secondary core 22, which may be made, for example, from ferrite, and a secondary coil 23, both of which being housed within a unit case 21. Output terminals (not shown) of the secondary coil 23 are connected to a charging circuit for charging a storage battery (not shown) of the electric vehicle. A high-frequency electromotive force induced in the secondary coil 23 is rectified so that the power battery may be charged.

As shown in Fig. 1, the secondary core 22 generally has an L-shape when viewed from the side. A horizontal portion of the L-shaped secondary core 22 defines a contact leg 22A having a columnar shape extending in a direction corresponding to a direction A of the charging connector 30. A vertical portion of the L-shaped secondary core 22, extending generally perpendicularly from the leg 22A, defines a connection portion 22B having a prismatic shape. Preferably, the width of the connection portion 22B is slightly larger than the diameter of the contact leg 22A. The secondary coil 23 is formed, for example, with a litz wire wound in layers about the contact leg 22A of the secondary core 22.

The secondary core 22 and the secondary coil 23 are received in a protection case 24 preferably made of a synthetic resin. The protection case 24 is secured to a unit case 21, thus the secondary core 22 and the secondary coil 23 are fixed relative to the vehicle body 1000. A distal end 222 of the contact leg 22A projects slightly from the protection case 24. An opening 224 is disposed forwardly of the connection portion 22B, the secondary core 22 being exposed thereby. A pair of guide grooves 25 for receiving shutter-opening pins 44 of the charging connector 30 are formed in the inner surfaces of the right and left side walls of the unit case 21.

The charging connector 30 includes a primary core 32 and a primary coil 33 which are housed within a connector housing 31. The primary core 32 and the primary coil 33 are similar in construction to the secondary core 22 and the secondary coil 23, respectively. The primary core 32 includes a contact leg 32A, having a columnar shape extending in the direction A of connection of the charging connector 30, and a connection portion 32B, having a prismatic shape extending substantially perpendicularly from the contact leg 32A. The primary coil 33 is wound on the contact leg 32A. The primary coil 33 is connected to a charging power source via a charging cable (not shown), and is excited by a high-frequency current, for example, of 100 KHz.

A handle 36 is provided on the connector housing 31, so that the connector housing 31 may be inserted manually into the unit case 21 of the secondary unit 20. An upper connection opening 31A exposes a distal end surface 320 of the contact leg 32A of the primary core 32 toward the front end 310 of the connector housing 31. A lower connection opening 31B exposes a front side surface 322 of the connection portion 32B in the front end 310 of the connector housing 31.

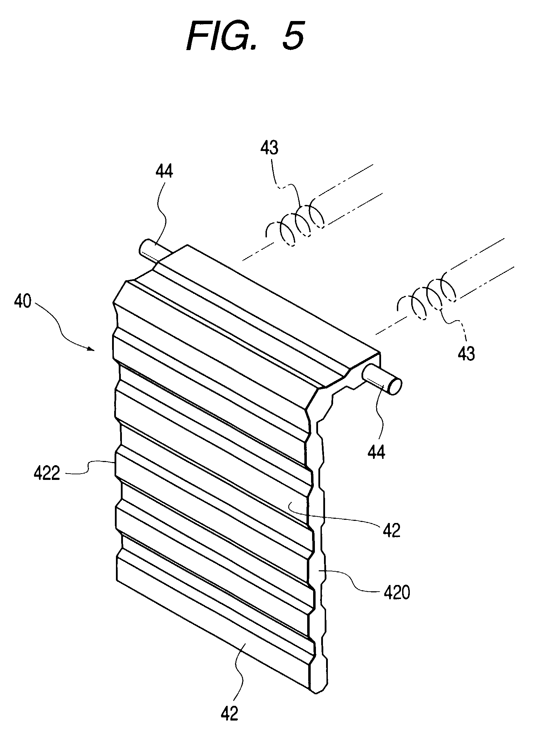

An upper shutter 40 and a lower shutter 41 provide for closing the connection openings 31A and 31B, respectively. As shown in Fig.5, the upper shutter 40 has a plurality of rectangular sections 42 rotatably connected along the widths thereof. The upper shutter 40 appears much like a Venetian shutter as a whole, and may be flexed. Opposite ends 420 and 422 of each of the sections 42 are inserted in guide grooves 37, as shown in Fig.1, formed in a peripheral edge of the connection opening 31A. With this construction, the shutter 40 is slidably supported on the connector housing 31, urged into a closed position by coil springs 43. The upper shutter 40 normally closes the upper connection opening 31A in the connector housing 31. When the shutter 40 is opened, it compresses the coil springs 43. The shutter-opening pins 44, corresponding to an interlocking mechanism, project from the right and left sides of the upper shutter 40, and extend outwardly through pin guide grooves 38 formed in right and left side walls of the connector housing 31. The shutter-opening pins 44 correspond to the guide grooves 25 formed in the unit case 21 of the secondary unit 20.

The lower shutter 41 has a flat plate preferably made of a synthetic resin, pivotally supported by a pivot shaft 45 on the front side 310 of the charging connector 30. This shutter 41 normally is urged in a clockwise direction by a torsion coil spring (not shown) to close the lower connection opening 31B, the free end thereof held against a receiving portion 31C of the connector housing 31.

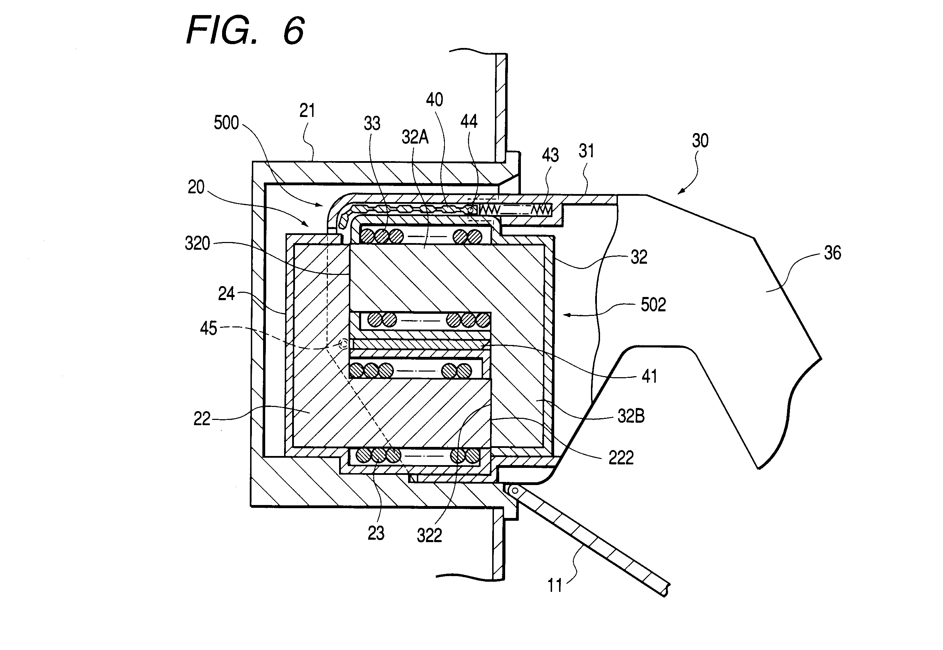

Referring also to Fig. 6, the operation of the embodiment having the above construction will be described. To charge an electric vehicle, the handle 36 is held with the hand and the distal end portion 500 of the charging connector 30 is inserted into the unit case 21 of the secondary unit 20, the lid 11 having been opened previously. The end of the protection case 24 of the secondary unit 20 contacts the lower shutter 41, and pivotally moves the shutter 41 upwardly about the pivot shaft 45, thereby opening the lower connection opening 31B. The shutter-opening pins 44 enter the guide grooves 25 in the unit case 21 and, upon reaching the innermost portions of the guide grooves 25, in accordance with the insertion of the charging connector 30, the shutter 40 is moved rearwardly. The shutter 40, a Venetian-type shutter, is moved from the upper connection opening 31A until the connection opening 31A is fully opened. When the charging connector 30 is fully inserted, the distal end 320 of the contact leg 32A of the exposed primary core 32 abuts against the connection portion 22B of the secondary core 22. Also the front surface 322 of the connection portion 32B of the primary core 32 abuts against the distal end 222 of the contact leg 22A of the secondary core 22. As a result, a closed-loop magnetic circuit having a rectangular shape is formed by the two cores 22 and 32. When the primary coil 33 is excited, an electromotive force is induced in the secondary coil 23, creating a current that may charge the battery.

After charging is finished, the handle 36 is held by the hand and the charging connector 30 is withdrawn from the secondary unit 20. The shutter 40 is slid in a direction to close the connection opening 31A under the influence of the coil springs 43. The shutter 41 is pivotally moved in a direction to close the connection opening 31b under the influence of the torsion coil spring. Thus, the two openings 31A and 31B are completely closed. Even if the coils 23 and 33 and the cores 22 and 32 generate heat during the charging operation, so that the temperature of these parts becomes high, they are secured by the shutters 40 and 41, therefore the operator is positively prevented from accidentally touching these parts. Also, the intrusion of foreign matters into the connector housing 31 is positively prevented, therefore the formation of a gap between the primary core 32 and the secondary core 22, as a result of the deposition of foreign matters on the surface of the primary core, as well as damage to the surface of the primary core 32, is prevented.

In this embodiment, the shutter-opening pins 44 are provided on the shutter 40, the shutter 41 is pivotally movable, the protection case 24 of the secondary unit 20 may be abutted against the shutter 41, and, with this construction, the shutters 40 and 41 are opened in accordance with the insertion of the charging connector 30. Therefore, before the charging connector 30 is inserted, it is not necessary to open the shutters 40 and 41 prior to insertion of the charging connector 30 into the secondary unit 20. Also, the coil springs 43 provided on the shutter 40 and the torsion spring provided on the shutter 41 provide for closing the shutters 40 and 41 automatically in accordance with the withdrawal of the charging connector 30. Therefore, after the charging operation is finished, it is not necessary to effect any separate operation for closing the shutters 40 and 41, enhancing the protective function of the shutters 40 and 41.

The upper shutter 40 has a plurality of rectangular sections 42 connected together along the widths thereof to form a "Venetian shutter" which may be flexed in the direction of connection of these rectangular sections, the opposite ends of each of the sections being slidably supported in the grooves 25 in the peripheral edge portions of the connection opening 31A. Therefore, the upper shutter 40 may be implemented in a narrow connector housing.

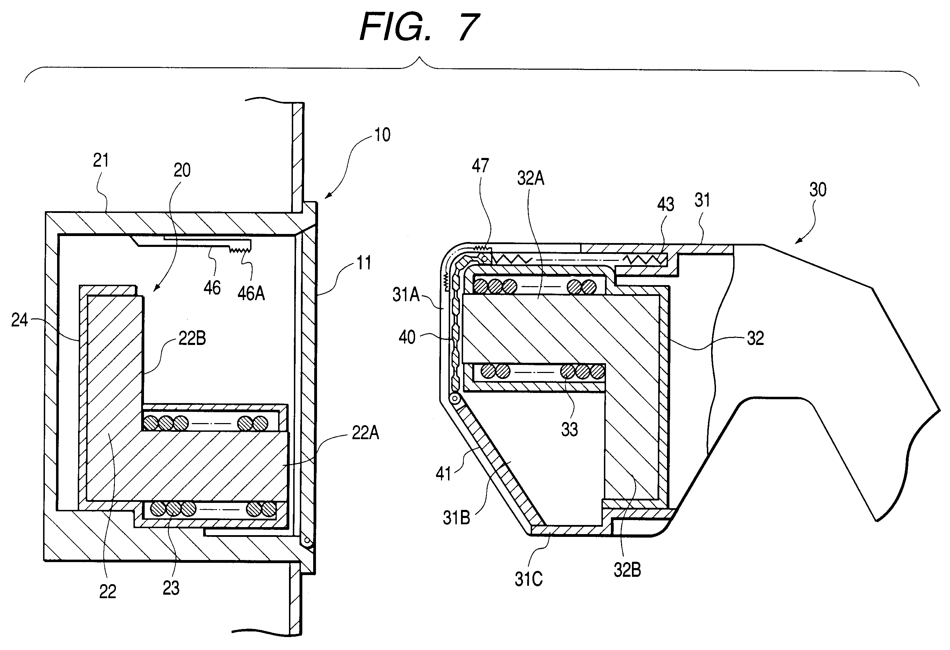

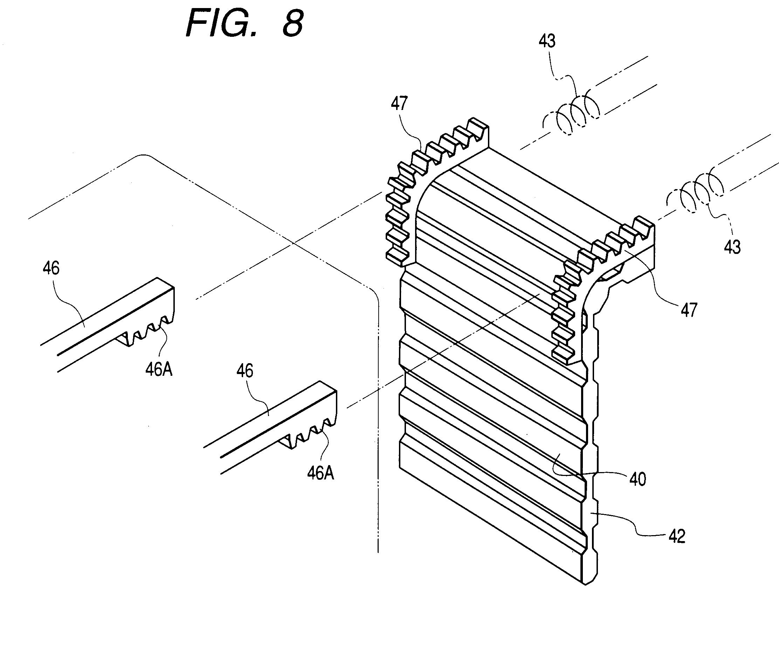

Figs. 7 and 8 show a second embodiment of the invention. This embodiment differs from the first embodiment in that an upper shutter 40 is driven by a different method. The other construction is the same as that of the first embodiment, therefore detailed description thereof is omitted.

Driven rack portions 47, which may be deformed with the shutter 40, are formed integrally on right and left edge portions of the shutter 40. Operating rods 46, corresponding to the driven rack portions 47, are provided in a projected manner at a secondary unit 20. A drive rack portion 46A for meshing with the associated driven rack portion 47 is formed at a distal end portion of each of the operating rods 46. When a charging connector 30 is inserted into the secondary unit 20, the drive rack portions 46A engage the driven rack portions 47 to slide the shutter 40 rearwardly. The shutter 40 is opened in accordance with the insertion of the charging connector 30, and the shutter 40 is closed in accordance with the withdrawal of the charging connector 30, therefore similar effects as described for the first embodiment are achieved.

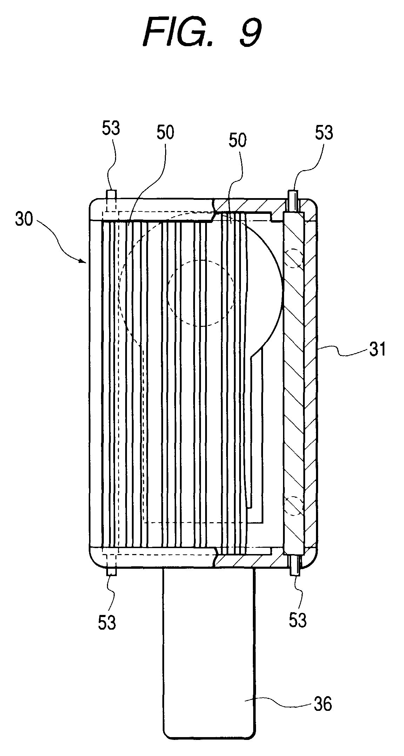

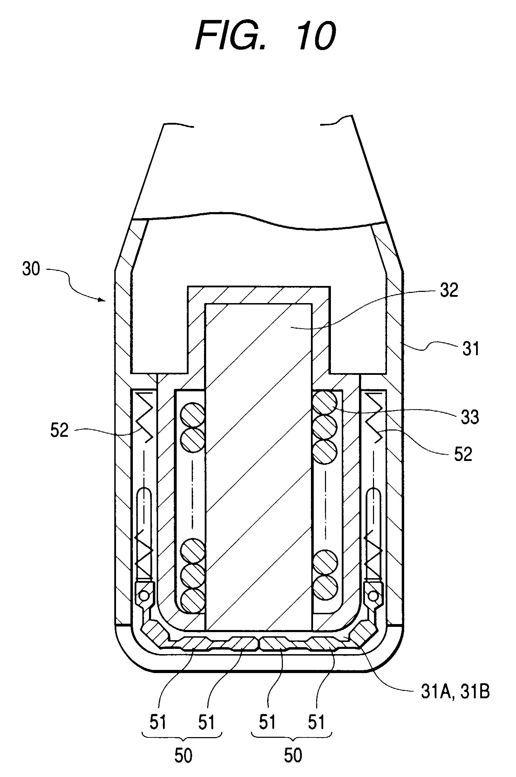

Figs. 9 and 10 show a third embodiment of the invention. This embodiment differs from the first embodiment in the direction of sliding movement of a shutter. In this embodiment, two shutters 50 are provided vertically, and contact each other to close the connection openings 31A and 31B in a connector housing 31. The two shutters 50 may be slid generally horizontally to open the two connection openings 31A and 31B. Like the shutter 40 of the first embodiment, each of the shutters 50 includes a plurality of rectangular sections 51 rotatably connected together along the widths thereof to form a Venetian shutter. The two shutters 50 jointly open and close the two connection openings 31A and 31B such that the sections 51 are disposed vertically. A coil spring 52 is provided at a rear end of each shutter 50, and normally urges the shutter 50 in a closing direction. Opening pins 53, configured to be received in the guide grooves provided in a unit case of a secondary unit (not shown), are formed on upper and lower edges of the shutter 50 at the rear end thereof. The shutters 50 are opened and closed in accordance with the insertion and withdrawal of a charging connector 30, therefore the operator is prevented from accidentally touching a heated portion, and the deposition of foreign matters and damage to the interior of the connector are prevented.

Another embodiment of the invention includes, for example, a brush mounted on the shutter such that each time the shutter is opened and closed, the contact surface of the core may be swept by the brush. In this case, the contact surface of the core is always kept proper, and therefore a good magnetically-coupled condition may be maintained.

Another embodiment of the invention includes covering the two connection openings with shutters, each in the form of a flat plate. Alternatively, the both connection openings may be covered by Venetian shutters.

The shutters may be in the form of a flexible sheet which may be opened by winding up this flexible sheet.

While this invention has been described in conjunction with the specific embodiments outline above, it is evident that many alternatives, modifications and variations are apparent to those skilled in the art. Accordingly, the preferred embodiments of the invention as set forth above are intended to be illustrative and not limiting. Various changes may be made without departing from the spirit and scope of the invention as defined in the following claims.

## Claims

1. A charging connector for an electric vehicle comprising:
a connector housing connectable to a power receiving portion formed in the electric vehicle;
a primary coil provided in said connector housing, and electromagnetically couplable to a secondary coil provided in said power receiving portion of said electric vehicle, whereby when said connector housing is connected to said power receiving portion, said primary coil and said secondary coil are electromagnetically coupled together to transmit electric power from said primary coil to said secondary coil by electromagnetic induction to charge a storage battery of the electric vehicle; and
a shutter provided at a connection opening in said connector housing, said connector housing being connectable to said power receiving portion through said connection opening.

2. A charging connector according to claim 1, said shutter including an interlocking mechanism which opens said shutter in accordance with the connection of said connector housing to said power receiving portion of said electric vehicle.

3. A charging connector according to claim 1, said shutter comprising a plurality of rectangular sections rotatably connected along widths thereof, opposite ends of each of said sections being slidably supported in grooves in peripheral edge portions of said connection opening, said shutter opening and closing said connection opening.

4. A power supplier comprising:
a housing;
a first coil mounted in said housing; and
a first shutter, displaceably mounted on an opening of said housing, selectably providing access to said first coil through said opening.

5. The power supplier of claim 4, wherein said first shutter is at least one of a Venetian-type, a hinged door-type and a rollable sheet-type.

6. The power supplier of claim 4, wherein said first shutter is adapted to be displaced as said power supplier is received in a power receiver.

7. The power supplier of claim 4, said first shutter comprising pins adapted to be received in grooves of a housing of a power receiver.

8. The power supplier of claim 4, said first shutter including a first rack of teeth adapted to engage with and be driven by a second rack of teeth in a housing of a power receiver.

9. The power supplier of claim 4, said first coil comprising:
a first portion adapted to inductively couple with a first portion of a second coil; and
a second portion adapted to inductively couple with a second portion of the second coil;
whereby said first coil and said second coil define an electromagnetic circuit when inductively coupled.

10. The power supplier of claim 9, wherein:
said first portion of said first coil has a cylindrical shape with a circular flat surface contactable to a flat surface of said first portion of said second coil; and
said second portion of said first coil has a flat surface contactable a flat radial surface of a cylindrical shape of said second portion of said second coil.

11. The power supplier of claim 9, further comprising a second shutter, said first shutter providing access to said first portion of said first coil and said second shutter providing access to said second portion of said first coil.

12. The power supplier of claim 11, wherein said second shutter is at least one of a Venetian-type, a hinged door-type and a rollable sheet-type.

13. A charging system comprising:
a power supplier comprising:
a housing;
a first coil; and
a first shutter, displaceably mounted on an opening of said housing, selectably providing access to the first coil; and
a power receiver comprising a second coil;
wherein said first coil is adapted to electromagnetically influence said second coil.

14. The charging system of claim 13, wherein said first shutter is at least one of a Venetian-type, a hinged door-type and a rollable sheet-type.

15. The charging system of claim 13, wherein said first shutter is adapted to be displaced as said power receiver receives said power supplier.

16. The charging system of claim 13, said power receiver further comprising a housing with a groove mounted on said second coil; and
said first shutter comprising a pin adapted to be received in said groove.

17. The charging system of claim 13, said first shutter comprising a first rack of teeth; and
said power receiver further comprising a second rack of teeth engageable with said first rack of teeth.

18. The charging system of claim 13, wherein said first coil comprises a first portion and a second portion; and
said second coil comprises a first portion and a second portion;
wherein said first portion of said first coil is adapted to inductively couple with said first portion of said second coil; and
said second portion of said first coil is adapted to inductively couple with said second portion of said second coil;
whereby said first coil and said second coil define an electromagnetic circuit when inductively coupled.

19. The charging system of claim 18, wherein:
said first portion of said first coil has a cylindrical shape with a circular flat surface contactable to a flat surface of said first portion of said second coil; and
said second portion of said first coil has a flat surface contactable to a flat radial surface of a cylindrical shape of said second portion of said second coil.

20. The charging system of claim 18, further comprising a second shutter on said housing, said first shutter providing access to said first portion of said first coil and said second shutter providing access to said second portion of said first coil.

21. The charging system of claim 20, wherein said second shutter is at least one of a Venetian-type, a hinged door-type and a rollable sheet-type.
